# EUROPÄISCHE PATENTSCHRIFT

(11) **EP 1 727 726 B1**
(45) Veröffentlichungstag und Bekanntmachung des Hinweises auf die Patenterteilung: **14.10.2009**
(21) Anmeldenummer: 05701226.2
(22) Anmeldetag: 28.01.2005
(51) Int. Cl.: B62D 17/00, B60G 21/05, B60G 17/015

(54) **VERFAHREN UND FAHRWERKSANORDNUNG ZUR FAHRSTABILITÄTSREGELUNG EINES KRAFTFAHRZEUGES**
METHOD AND CHASSIS ARRANGEMENT FOR CONTROLLING THE DRIVING STABILITY OF A MOTOR VEHICLE
PROCEDE ET ENSEMBLE CHASSIS SERVANT A REGULER LA STABILITE DE CONDUITE D'UN VEHICULE AUTOMOBILE

(30) Priorität: 25.03.2004 DE 102004014576
(43) Veröffentlichungstag der Anmeldung: 06.12.2006
(73) Patentinhaber: ZF FRIEDRICHSHAFEN Aktiengesellschaft, 88038 Friedrichshafen (DE)
(72) Erfinder: MÜNSTER, Martin, 88048 Friedrichshafen (DE)
(86) Internationale Anmeldenummer: PCT/EP2005/000821
(87) Internationale Veröffentlichungsnummer: WO 2005/097579

(56) Entgegenhaltungen:
- EP-A- 1 325 822
- WO-A-20/04009383
- US-A1- 2003 030 241

## Beschreibung

Die Erfindung betrifft ein Verfahren und eine Fahrwerksanordnung zur Fahrstabilitätsregelung eines Kraftfahrzeuges.

Zur Fahrstabilitätsregelung eines Kraftfahrzeuges sind unterschiedliche Eingriffsmöglichkeiten und Verfahren bekannt. So werden aktive Stabilisatoren zur Kompensation der Wankneigung aufgrund der bei einer Kurvenfahrt auftretenden Querbeschleunigung eingesetzt. In der Regel sind hierzu beide Fahrzeugachsen mit aktiven Stabilisatoren ausgestattet und die von den aktiven Stabilisatoren ausgeübten Abstützmomente bzw. Antiwankmomente konstant oder zum Teil auch variabel auf die beiden Fahrzeugachsen verteilt.

Weiterhin sind Verfahren und Einrichtungen zur Veränderung des Radsturzwinkels in Radaufhängungen von Kraftfahrzeugen bekannt. Bei Achskonzepten mit einer passiven, selbsttätigen kinematischen Radsturzwinkelverstellung wird der Radsturz durch die Wankbewegungen und einwirkenden Querkräfte selbsttätig beziehungsweise passiv verstellt. Bei Achskonzepten mit aktiver Radsturzwinkelverstellung wird der Radsturzwinkel durch einen oder mehrere Aktuatoren auch ohne Einwirkung von Wankbewegungen oder Querkräften verändert. Derartige Radsturzwinkelverstellvorrichtungen sind in der Regel an der Hinterachse angeordnet, da ihre Implementierung an der Vorderachse durch das verringerte Platzangebot, die großen Lenkeinschlagswinkel sowie die Antriebswellen bei angetriebenen Achsen schwierig ist.

EP 1 325 822 offenbart eine Aufhängung eines Fahrzeuges, bei dem in Abhängigkeit von einem Fahrzustand ein hinterer Radsturzwinkel der Räder der Hinterachse aktiv eingestellt wird

Durch eine Sturzverstellung an der Hinterachse werden die übertragbaren Seitenführungskräfte gesteigert, so dass gegenüber herkömmlichen Fahrzeugen bei identischem Fahrmanöver der erforderliche Achsschräglaufwinkel reduziert ist.

Durch die Verringerung des Schräglaufwinkels an der Hinterachse bei unverändertem Schräglaufwinkel an der Vorderachse verändert sich jedoch das Eigenlenkverhalten des Fahrzeuges zu einer Untersteuertendenz hin. Dies liegt am gleichzeitigen Abbau des Gierwinkels, verursacht durch den verringerten Schräglaufwinkel an der mit einer Sturzkorrektureinrichtung versehenen Hinterachse. Um dem gewünschten Fahrkurs ohne Abweichung weiterhin zu folgen, muß der Schräglaufwinkel an der Vorderachse durch stärkeres Einlenken vergrößert werden, damit die gewünschte Gierwinkelgeschwindigkeit erreicht oder aufrechterhalten wird. Begünstigt wird dieser Effekt durch die ungleichmäßige Verteilung der Wanksteifigkeit auf die Fahrzeugachsen, da üblicherweise an der Vorderachse eine höhere Wanksteifigkeit vorliegt als an der Hinterachse und daher auch an der Vorderachse höhere Seitenführungskräfte gefordert werden. Somit steigert eine Sturzkorrektur an der Hinterachse auch die Seitenführung an der Hinterachse, obwohl der größere Abstützanteil an der Vorderachse erbracht wird.

Der Einsatz von aktiven Stabilisatoren ist bei zusätzlich vorgesehenen passiven Radsturzverstellungen problematisch, da passive Radsturzverstellungen zur Änderung des Sturzes die Wankbewegungen des Fahrzeugaufbaus benötigen. Werden diese Wankbewegungen durch aktive Stabilisatoren oder sonstige Wankstabilisierungssysteme kompensiert, ist eine wirksame Sturzverstellung nicht mehr möglich, da keine nennenswerten Winkeländerungen mehr auftreten.

Vor diesem Hintergrund liegt der Erfindung die Aufgabe zugrunde, ein Verfahren und eine Fahrwerksanordnung zur Fahrstabilitätsregelung eines Kraftfahrzeuges zu schaffen, die sowohl eine hohe Wanksteifigkeit als auch hohe Seitenführungskräfte bei neutralerem Fahrverhalten ermöglichen.

Die Lösung dieser Aufgabe ergibt sich aus den Merkmalen der unabhängigen Ansprüche 1 und 6, während vorteilhafte Ausgestaltungen und Weiterbildungen der Erfindung den Unteransprüchen entnehmbar sind.

Der Erfindung liegt die Erkenntnis zugrunde, dass die untersteuernd wirkende Anpassung des Radsturzwinkels, bei der die Räder sich oben weiter nach Fahrzeuginnen neigen und sich hierdurch in die Kurve stemmen, in vorteilhafter Weise mit aktiven Stabilisatoren kombiniert werden kann. Erfindungsgemäß werden somit zumindest an der Hinterachse aktive Radsturzverstelleinrichtungen mit aktiven Stabilisatoren kombiniert.

Durch aktive Stabilisatoren lässt sich die Verteilung des Wankmomentes und damit der erforderlichen Seitenführung zwischen den Achsen verlagern, wobei eine Verlagerung der Wankabstützung auf die Hinterachse die untersteuernd wirkende Anpassung des Radsturzwinkels ganz oder teilweise kompensieren kann. Durch die Verlagerung der Wankabstützung auf die Hinterachse wird daher das durch die Anpassung des Radsturzes dort erschlossene zusätzliche Seitenführungspotential auch tatsächlich abgerufen. Somit können höhere Seitenführungskräfte erreicht und auch ausgenutzt werden, ohne das Eigenlenkverhalten des Fahrzeuges negativ zu beeinflussen.

Demgemäss beschreibt die Erfindung ein Verfahren zur Fahrstabilitätsregelung eines Fahrzeuges, bei dem in Abhängigkeit von einem Fahrzustand ein hinterer Radsturzwinkel der Räder der Hinterachse aktiv eingestellt wird sowie an der Vorderachse ein vorderes Antiwankmoment und an der Hinterachse ein hinteres Antiwankmoment ausgeübt werden. Zudem wird eine das Verhältnis des hinteren Antiwankmomentes zu dem vorderen Antiwankmoment wiedergebende Wankmomentverteilung in Abhängigkeit von dem hinteren Radsturzwinkel der Räder der Hinterachse eingestellt.

In vorteilhafter Ausgestaltung dieses Verfahrens kann zudem vorgesehen sein, dass das Verhältnis des hinteren Antiwankmomentes zu dem vorderen Antiwankmoment vergrößert wird, wenn der hintere Radsturzwinkel der Räder der Hinterachse verringert wird.

Zudem kann vorgesehen sein, dass nur der hintere Radsturzwinkel der Räder der Hinterachse aktiv eingestellt wird und ein vorderer Radsturzwinkel der Räder der Vorderachse sich passiv einstellt.

Gemäß einer Variante der Erfindung wird zunächst eine Regelung der Fahrstabilität nach dem hinteren Radsturzwinkel durchgeführt und anschließend die Wankmomentverteilung dem eingestellten hinteren Radsturzwinkel angepasst.

Eine davon unabhängige Variante sieht vor, dass zu einem ermittelten Fahrzustand der hintere Radsturzwinkel und die Wankmomentverteilung nach einem Kennlinienfeld eingestellt werden. Dadurch ist die zeitliche Reihenfolge der Einstellung von Wankmomentverteilung und Radsturzwinkel in Abhängigkeit vom ermittelten Fahrzustand variabel.

Schließlich kann vorgesehen sein, dass nur der hintere Radsturzwinkel aktiv eingestellt wird, und dass sich der vordere Radsturzwinkel passiv, dass heißt selbsttätig einstellt.

Die erfindungsgemäße Fahrwerksanordnung umfasst zumindest Aktuatoren zur Verstellung eines hinteren Radsturzwinkels der Räder der Hinterachse des Fahrzeuges, einen vorderen aktiven Stabilisator zur Einstellung eines vorderen Antiwankmomentes an der Vorderachse und einen hinteren aktiven Stabilisator zur Einstellung eines hinteren Antiwankmomentes an der Hinterachse, wobei eine Steuereinrichtung zur Einstellung einer das Verhältnis des hinteren Antiwankmomentes zu dem vorderen Antiwankmoment wiedergebenden Wankmomentverteilung in Abhängigkeit von dem Radsturzwinkel der Räder der Hinterachse vorgesehen ist. Dabei können an jedem Hinterrad ein Aktuator oder auch mehrere Aktuatoren vorgesehen sein.

In bevorzugter Ausgestaltung dieser Fahrwerksanordnung ist vorgesehen, dass die Steuereinrichtung derart ausgebildet ist, dass mit dieser das Verhältnis des hinteren Antiwankmomentes zu dem vorderen Antiwankmoment vergrößert wird, wenn der hintere Radsturzwinkel der Räder der Hinterachse verringert wird.

Schließlich kann vorgesehen sein, dass an den Radaufhängungen der Räder der Vorderachse nur passive Radsturzverstellvorrichtungen vorgesehen sind.

Das erfindungsgemäß hinzugewonnene fahrdynamische Potential kann sowohl zur komfortableren Abstimmung innerhalb eines auch mit einem passiven Fahrzeug erreichbaren Grenzbereichs, als auch zu einer Steigerung des Grenzbereichs bei einer dem passiven Fahrzeug entsprechenden Federungsauslegung genutzt werden. Diese Variation zu einem komfortableren und/oder einem sportlicheren Fahrverhalten kann mit lediglich geringen Änderungen am Grundfahrwerk erreicht werden, so dass erfindungsgemäß mit geringen hardwaremäßigen Variationen eine große Bandbreite an Fahrzeugcharakteren eingestellt werden kann.

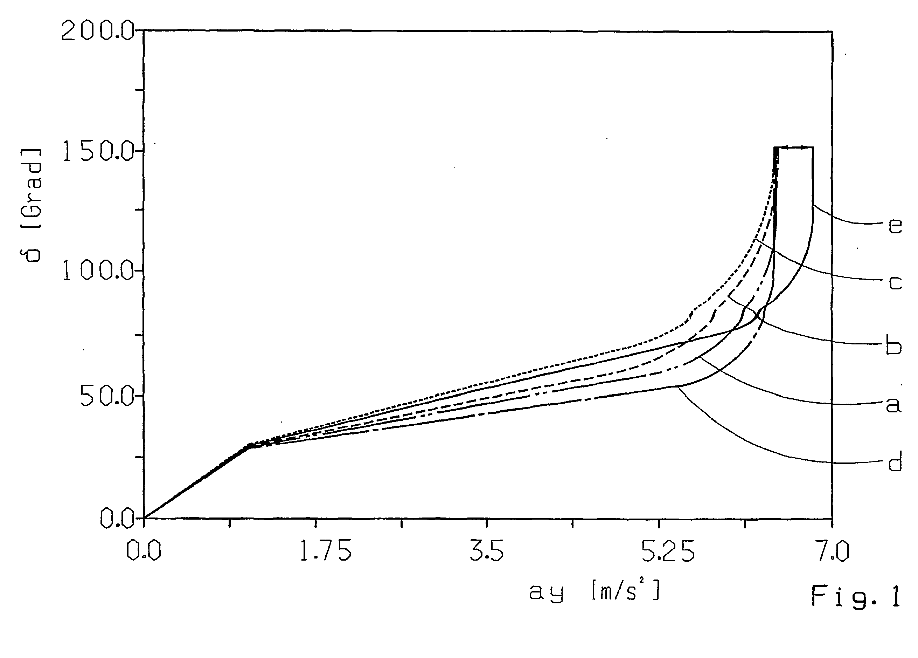

Zur Verdeutlichung der Erfindung ist der Beschreibung eine Zeichnung beigefügt. Die Figur zeigt ein Diagramm eines einzustellenden Lenkradwinkels in Abhängigkeit von der auftretenden Querbeschleunigung bei verschiedenen Fahrstabilitätsregelungen bzw. Fahrwerksanordnungen.

In der Figur ist der vom Fahrer einzustellende Lenkradwinkel δ in Grad in Abhängigkeit von der am Fahrzeug auftretenden Querbeschleunigung ay in m/s² wiedergegeben für ein Fahrwerk mit
- a: einer passiven Fahrwerksanordnung ohne aktive Komponenten zur Sturzverstellung oder Wankmomentabstützung,
- b: konstantem Sturz = 0° ohne aktive Stabilisatoren,
- c: negativem Sturz ohne aktive Stabilisatoren,
- d: positivem Sturz ohne aktive Stabilisatoren und
- e: negativem Sturz und aktiven Stabilisatoren.

Durch dieses Diagramm wird der Einfluss der Radsturzverstellung auf das Eigenlenkverhalten wiedergegeben. Zunächst ist der Einfluss einer Radsturzverstellung auf das Eigenlenkverhalten mit und ohne angepasster Wanksteifigkeitsverteilung durch die Stabilisatoren gezeigt. Gegenüber der Kurve a eines passiven Fahrzeugs ohne aktive Fahrwerkskomponenten führen negativ wachsende Radsturzwinkel gemäß Kurve c bei Fahrzeugen mit aktiver Sturzverstellung zu einer deutlichen Verstärkung der Untersteuertendenz des Fahrzeuges, welches einen erhöhten Lenkbedarf und eine reduzierte Lenkwilligkeit zur Folge hat. Da sich aufgrund des auftretenden Wankwinkels am passiven Fahrzeug ein positiver Radsturzwinkel einstellt, führt bereits der in Kurve b gezeigte, konstant bei 0° gehaltene Sturzwinkel bei Fahrzeugen mit Sturzkorrektur zu leicht verstärktem Untersteuern. Umgekehrt ist es gemäß der Kurve d möglich, durch positive Sturzwinkel das Eigenlenkverhalten neutraler abzustimmen, wodurch allerdings der Grenzbereich der erreichbaren Seitenführungskraft reduziert wird.

Gemäß der Kurve e wird durch eine Einstellung eines negativen Sturzes und unter Verwendung von Stabilisatoren eine um etwa 5 % höhere Grenzquerbeschleunigung erreicht, welches durch den Pfeil an den oberen Endpunkten der Kurven kenntlich gemacht ist. Hierbei sind erfindungsgemäß weitere Steigerungen dahingehend möglich, dass auch das in weiten Bereichen untersteuernde Verhalten durch die aktiven Stabilisatoren verbessert wird.

### Bezugszeichen

- a: Kennlinie einer passiven Fahrwerksanordnung ohne aktive Komponenten zur Sturzverstellung oder Wankmomentabstützung
- b: Kennlinie einer Fahrwerksanordnung mit konstantem Sturz ohne aktive Stabilisatoren
- c: Kennlinie einer Fahrwerksanordnung mit negativem Sturz ohne aktive Stabilisatoren
- d: Kennlinie einer Fahrwerksanordnung mit positivem Sturz ohne aktive Stabilisatoren
- e: Kennlinie einer Fahrwerksanordnung mit negativem Sturz und aktiven Stabilisatoren

- ay: Querbeschleunigung des Fahrzeuges
- δ: Lenkradwinkel des Fahrzeuges

## Patentansprüche

1. Verfahren zur Fahrstabilitätsregelung eines Fahrzeuges, bei dem in Abhängigkeit von einem Fahrzustand
ein hinterer Radsturzwinkel der Räder der Hinterachse aktiv eingestellt wird, an der Vorderachse ein vorderes Antiwankmoment und an der Hinterachse ein hinteres Antiwankmoment ausgeübt werden,
wobei eine das Verhältnis des hinteren Antiwankmomentes zu dem vorderen Antiwankmoment wiedergebende Wankmomentverteilung in Abhängigkeit von dem hinteren Radsturzwinkel der Räder der Hinterachse eingestellt wird.

2. Verfahren nach Anspruch 1, **dadurch gekennzeichnet, dass** das Verhältnis des hinteren Antiwankmomentes zu dem vorderen Antiwankmoment vergrößert wird, wenn der hintere Radsturzwinkel der Räder der Hinterachse verringert wird.

3. Verfahren nach Anspruch 1 oder 2, **dadurch gekennzeichnet, dass** nur der hintere Radsturzwinkel der Räder der Hinterachse aktiv eingestellt wird und ein vorderer Radsturzwinkel der Räder der Vorderachse sich passiv einstellt.

4. Verfahren nach einem der vorherigen Ansprüche, **dadurch gekennzeichnet, dass** zunächst eine Regelung der Fahrstabilität nach dem hinteren Radsturzwinkel erfolgt und die Wankmomentverteilung dem eingestellten hinteren Radsturzwinkel angepasst wird.

5. Verfahren nach einem der Ansprüche 1 bis 3, **dadurch gekennzeichnet, dass** zu einem ermittelten Fahrzustand der hintere Radsturzwinkel und die Wankmomentverteilung nach einem Kennlinienfeld eingestellt werden.

6. Fahrwerksanordnung zur Fahrstabilitätsregelung eines Fahrzeuges,
wobei die Fahrwerksanordnung mindestens aufweist:
Aktuatoren zur Verstellung eines hinteren Radsturzwinkels der Räder der Hinterachse des Fahrzeuges,
einen vorderen aktiven Stabilisator zur Einstellung eines vorderen Antiwankmomentes an der Vorderachse und
einen hinteren aktiven Stabilisator zur Einstellung eines hinteren Antiwankmomentes an der Hinterachse,
wobei eine Steuereinrichtung zur Einstellung einer das Verhältnis des hinteren Antiwankmomentes zu dem vorderen Antiwankmoment wiedergebenden Wankmomentverteilung in Abhängigkeit von dem Radsturzwinkel der Räder der Hinterachse vorgesehen ist.

7. Fahrwerksanordnung nach Anspruch 6, **dadurch gekennzeichnet, dass** die Steuereinrichtung das Verhältnis des hinteren Antiwankmomentes zu dem vorderen Antiwankmoment vergrößert, wenn der hintere Radsturzwinkel der Räder der Hinterachse verringert wird.

8. Fahrwerksanordnung nach Anspruch 6 oder 7, **dadurch gekennzeichnet, dass** an Radaufhängungen der Räder der Vorderachse nur passive Radsturzverstellungen vorgesehen sind.

## Claims

1. Method for controlling the driving stability of a vehicle, in which, as a function of a driving state, a rear wheel camber angle of the wheels of the rear axle is set actively, a front anti-roll moment is applied to the front axle and a rear anti-roll moment is applied to the rear axle,
wherein a rolling moment distribution, which represents the ratio of the rear anti-roll moment with respect to the front anti-roll moment, is set as a function of the rear wheel camber angle of the wheels of the rear axle.

2. Method according to Claim 1, **characterized in that** the ratio of the rear anti-roll moment with respect to the front anti-roll moment is increased if the rear wheel camber angle of the wheels of the rear axle is reduced.

3. Method according to Claim 1 or 2, **characterized in that** only the rear wheel camber angle of the wheels of the rear axle is set actively, and a front wheel camber angle of the wheels of the front axle is set passively.

4. Method according to one of the preceding claims, **characterized in that** at first the driving stability is controlled in accordance with the rear wheel camber angle, and the rolling moment distribution is adapted to the rear wheel camber angle which has been set.

5. Method according to one of Claims 1 to 3,
**characterized in that** the rear wheel camber angle and the rolling torque distribution are set for an identified driving state in accordance with a characteristic diagram.

6. Chassis arrangement for controlling the driving stability of a vehicle, wherein the chassis arrangement has at least:
actuators for adjusting a rear wheel camber angle of the wheels of the rear axle of the vehicle,
a front active stabilizer for setting a front anti-roll moment at the front axle, and
a rear active stabilizer for setting a rear anti-roll moment at the rear axle,
wherein a control device is provided for setting a rolling moment distribution, representing the ratio of the rear anti-roll moment with respect to the front anti-roll moment, as a function of the wheel camber angle of the wheels of the rear axle.

7. Chassis arrangement according to Claim 6,
**characterized in that** the control device increases the ratio of the rear anti-roll moment with respect to the front anti-roll moment if the rear wheel camber angle of the wheels of the rear axle is reduced.

8. Chassis arrangement according to Claim 6 or 7, **characterized in that** only passive wheel camber adjustment means are provided on wheel suspension means for the wheels of the front axle.

## Revendications

1. Procédé servant à réguler la stabilité de conduite d'un véhicule, dans lequel en fonction d'un état de conduite :
un angle de carrossage de roue arrière des roues de l'essieu arrière est réglé de façon active ;
un moment d'antiroulis avant étant exercé au niveau de l'essieu avant et un moment d'antiroulis arrière étant exercé au niveau de l'essieu arrière ;
une répartition du moment de roulis restituant le rapport du moment d'antiroulis arrière par rapport au moment d'antiroulis avant étant prévue en fonction de l'angle de carrossage de roue arrière des roues de l'essieu arrière.

2. Procédé selon la revendication 1, **caractérisé en ce que** le rapport du moment d'antiroulis arrière par rapport au moment d'antiroulis avant est augmenté lorsque l'angle de carrossage de roue arrière des roues de l'essieu arrière est réduit.

3. Procédé selon la revendication 1 ou 2,
**caractérisé en ce que** seul l'angle de carrossage de roue arrière des roues de l'essieu arrière est réglé de façon active et **en ce que** l'angle de carrossage de roue avant des roues de l'essieu avant est réglé de façon passive.

4. Procédé selon l'une quelconque des revendications précédentes, **caractérisé en ce qu'**un réglage de la stabilité de conduite est réalisé ensuite d'après l'angle de carrossage de roue arrière et **en ce que** la répartition du moment de roulis est adaptée à l'angle de carrossage de roue arrière réglé.

5. Procédé selon l'une quelconque des revendications 1 à 3, **caractérisé en ce que** pour un état de conduite déterminé, l'angle de carrossage de roue arrière et la répartition du moment de roulis sont réglés d'après un champ de courbe caractéristique.

6. Ensemble châssis servant à réguler la stabilité de conduite d'un véhicule, l'ensemble châssis comportant au moins :
des actionneurs de réglage d'un angle de carrossage de roue arrière des roues de l'essieu arrière du véhicule ;
un stabilisateur actif avant pour réaliser le réglage d'un moment d'antiroulis au niveau de l'essieu avant ; et
un stabilisateur actif arrière pour réaliser le réglage d'un moment d'antiroulis arrière au niveau de l'essieu arrière ;
un dispositif de commande étant prévu pour le réglage d'une répartition du moment de roulis restituant le rapport du moment d'antiroulis arrière par rapport au moment d'antiroulis avant en fonction de l'angle de carrossage de roue des roues de l'essieu arrière.

7. Ensemble châssis selon la revendication 6,
**caractérisé en ce que** le dispositif de commande augmente le rapport du moment d'antiroulis arrière par rapport au moment d'antiroulis avant lorsque l'angle de carrossage de roue arrière des roues de l'essieu arrière est réduit.

8. Ensemble châssis selon la revendication 6 ou 7, **caractérisé en ce que** seul un réglage de carrossage de roue passif est prévu au niveau des suspensions de roue des roues de l'essieu avant.
